# EUROPEAN PATENT APPLICATION

(11) **EP 4 797 378 A1**
(43) Date of publication of application: **26.08.2026**
(21) Application number: 25886202.8
(22) Date of filing: 26.09.2025
(51) Int. Cl.: H01M 10/44, H01M 50/618, H01M 50/627, H01M 10/46, H01M 10/04

(54) **BATTERY CELL STORAGE DEVICE AND BATTERY CELL ACTIVATION METHOD USING SAME**

(30) Priority: 28.10.2024 KR 20240148883
(71) Applicant: LG Energy Solution, Ltd., Seoul 07335 (KR)
(72) Inventor: YU, Sung Hoon, Daejeon 34122 (KR)
(74) Representative: Goddar, Heinz J.
(86) International application number: PCT/KR2025/015185
(87) International publication number: WO 2026/095374

(57) **Abstract**

The present disclosure provides a battery cell storage device and a battery cell activation method using the same, wherein the battery cell storage device includes: a main body in which a battery cell is accommodated inside and which is capable of being sealed; a charge/discharge unit including a charge/discharge terminal electrically connected to an electrode lead of the battery cell in the main body; and a vacuum unit, and wherein the vacuum unit controls pressure inside the main body.

## Description

### [Technical Field]

The present disclosure relates to a battery cell storage device and a battery cell activation method using the same.

This application claims the benefit of priority from Korean Patent Application No. 10-2024-0148883, filed on October 28, 2024, the entire contents disclosed therein are incorporated by reference into this disclosure.

### [Background]

A secondary battery capable of charging and discharging is gaining attention as a power source for devices requiring high output and large capacity, including electric vehicles, hybrid electric vehicles, and plug-in hybrid electric vehicles, which are being proposed as a solution to air pollution caused by existing gasoline vehicles and diesel vehicles using fossil fuels.

Representatively, in terms of the shape of battery, there is high demand for prismatic secondary batteries and pouch-type secondary batteries with a thin thickness that can be applied to products such as mobile phones, and in terms of materials of battery, there is high demand for lithium secondary batteries such as lithium-ion batteries and lithium-ion polymer batteries, which have advantages such as high energy density, discharge voltage, and output stability.

Such secondary batteries are also classified according to the structure of an electrode assembly having a positive electrode/separator/negative electrode structure. Representative examples include a jelly-roll (wound type) electrode assembly having a structure in which long sheet-type positive electrodes and negative electrodes are wound with a separator interposed therebetween, a stack type (laminated type) electrode assembly in which a plurality of positive electrodes and negative electrodes cut into units of a predetermined size are sequentially stacked with a separator interposed therebetween, and a stack/folding type electrode assembly having a structure in which bi-cells or full cells in which positive electrodes and negative electrodes of a predetermined unit are stacked with a separator interposed therebetween are wound.

A structure in which the wound type electrode assembly is accommodated in a cylindrical battery case together with an electrolyte is referred to as a cylindrical battery cell, and a structure in which a stack type or stack/folding type electrode assembly is accommodated in a prismatic battery case together with an electrolyte is referred to as a prismatic battery cell. In addition, a structure in which the stack type or stack/folding type electrode assembly is accommodated in a pouch-type battery case together with an electrolyte is referred to as a pouch-type battery cell.

However, when the electrolyte is not completely impregnated inside the electrode assembly, there is a risk of defects. In addition, a problem has occurred in which the air inside the battery case is not properly discharged during the process of injecting the electrolyte, so that the electrolyte is not completely injected into the battery case. Such problems eventually cause problems of decreased process efficiency and increased product unit cost.

In addition, such residual air inside may cause an explosion by excessively increasing the internal pressure during charging and discharging when the battery case is sealed.

A battery cell in which an electrode assembly and an electrolyte are accommodated in a battery case and sealed undergoes an activation process to provide its characteristics. The activation process proceeds by charging and discharging the battery cell, and at this time, an activation gas may be generated inside the sealed battery case.

Conventionally, there was a problem of being very cumbersome because the battery case was reopened to discharge the activation gas, or the battery case was sealed again after a separate gas removal process.

### [Summary]

### [Technical Problem]

Accordingly, the present disclosure has been devised to solve the above problems, and an object thereof is to provide a device capable of smoothly performing injection and impregnation of an electrolyte.

In addition, an object of the present disclosure is to provide a device capable of performing all of electrolyte injection, electrolyte impregnation, and an activation process.

Other objects and advantages of the present disclosure may be understood by the following description, and will be more clearly understood by embodiments of the present disclosure. In addition, it will be easily understood that the objects and advantages of the present disclosure can be realized by means and combinations thereof indicated in the claims.

### [Technical Solution]

According to the present disclosure, there is provided a battery cell storage device comprising: a main body in which a battery cell is accommodated inside and which is capable of being sealed; a charge/discharge unit including a charge/discharge terminal electrically connected to an electrode lead of the battery cell in the main body; and a vacuum unit, wherein the vacuum unit controls pressure inside the main body.

The battery cell may be accommodated in the main body in a state in which an opening is formed on one side.

The vacuum unit may be in communication with the inside of the main body to suction air inside the main body for pressure reduction, or to inject air into the inside of the main body for pressurization.

The main body includes at least one pressure control port, and the vacuum unit may be connected to the pressure control port.

The vacuum unit may include: a pressure pump; a dual valve unit installed at the pressure control port and including a fluid outlet opened toward the inside of the main body at a lower portion; an air transfer pipe connecting the pressure pump and the dual valve unit; and a fluid discharge pipe connected to the fluid outlet, wherein the dual valve unit may include a fluid flow path formed such that the air transfer pipe and the fluid outlet are in communication.

The dual valve unit may further include an electrolyte injection port formed on one side to be in communication with the fluid flow path and capable of being opened and closed, and an electrolyte supplied to the electrolyte injection port may be delivered to the battery cell in the main body through the fluid discharge pipe.

An end of the fluid discharge pipe may face the opening of the battery cell.

The main body may include a plurality of pressure control ports, and the vacuum unit may include a plurality of dual valve units corresponding to the number of the pressure control ports.

The fluid discharge pipe may comprise: a main pipe directly connected to the fluid outlet; and a plurality of sub-pipes branched from the main pipe, wherein fluids moving through each of the sub-pipes may have the same fluid pressure.

The end of each sub-pipe may face the opening of a different battery cell.

The main body may further include a gas outlet formed to be capable of being opened and closed to control air pressure inside and to discharge gas.

The main body may further include a fixing member for fixing the battery cell to stand upright such that the opening of the battery cell faces upward.

The battery cell may have any one form of a cylindrical type including a cylindrical battery case with an open upper portion, and a pouch type including a pouch-type battery case with one side open.

According to the present disclosure, there is provided a battery cell activation method comprising: a preparation step of accommodating a battery cell in a battery cell storage device; an electrolyte injection step of supplying an electrolyte to the battery cell; and an activation step of activating the battery cell by charging and discharging the battery cell.

A step of reducing pressure inside the main body before the preparation step may be further included.

A step of reducing pressure inside the main body after the preparation step may be further included.

### [Advantageous Effects]

According to the present disclosure, it is possible to prevent defective assembly of battery cells by smoothly performing an electrolyte injection and impregnation process.

In addition, according to the present disclosure, it is possible to improve process efficiency by using a device capable of performing all of electrolyte injection, impregnation, and activation processes.

### [Brief Description of the Drawings]

FIG. 1 is a schematic diagram of a battery cell storage device of the present disclosure.
FIG. 2 is a perspective view of a main body included in a battery cell storage device according to a first embodiment of the present disclosure.
FIG. 3 is a side view of the main body of FIG. 2.
FIG. 4 is a perspective view illustrating a process of accommodating a battery cell inside the main body of FIG. 2.
FIG. 5 is a perspective view illustrating a process of connecting a charge/discharge terminal to the battery cell of FIG. 4.
FIG. 6 is a cross-sectional view of a dual valve unit of the present disclosure.
FIG. 7 is a cross-sectional view of another embodiment of the dual valve unit of FIG. 6.
FIG. 8 is a cross-sectional view illustrating an operation of the dual valve unit of FIG. 6.
FIG. 9 is a cross-sectional view of a main body of a battery cell storage device according to a first embodiment in which a battery cell is accommodated.
FIG. 10 is a modified example of the main body of FIG. 3.
FIG. 11 is a perspective view of a main body included in a battery cell storage device according to a second embodiment of the present disclosure.
FIG. 12 is a side view of the main body of FIG. 11.
FIG. 13 is a side view of the main body of FIG. 12 in which a battery cell is accommodated.
FIG. 14 is a side view of a main body included in a battery cell storage device according to a third embodiment of the present disclosure.
FIG. 15 is a perspective view of a main body included in a battery cell storage device according to a fourth embodiment of the present disclosure and a battery cell accommodated therein.
FIG. 16 is a process flowchart illustrating a battery cell activation process.

### [Detailed Description]

Hereinafter, preferred embodiments of the present disclosure will be described in detail with reference to the accompanying drawings. Prior to this, terms and words used in the present specification should not be construed as limited to conventional or dictionary meanings and should be interpreted with the meaning and concept in accordance with the technical idea of the present disclosure based on the principle that the inventors can appropriately define the meanings of terms or words in order to explain the invention in the best way.

Therefore, it should be understood that the embodiments and drawings are merely examples of the present disclosure and do not represent all of the technical spirit of the present disclosure, and that there may be various equivalents and modifications that can replace them at the time of the present application.

In addition, when it is determined that detailed descriptions of known configurations or functions may obscure the gist of the present disclosure in describing the present disclosure, the detailed descriptions thereof are omitted.

Since the embodiments of the present disclosure are provided to more completely explain the present disclosure to a person skilled in the art, shapes and sizes of components in the drawings may be exaggerated, omitted, or schematically illustrated for clearer explanation. Therefore, the size or proportion of each component does not entirely reflect the actual size or proportion.

Similar reference numerals are used for similar components while describing each drawing. In the accompanying drawings, dimensions of structures are enlarged than actual for clarity of the present disclosure. Terms used to describe various components are for the purpose of understanding, and the components should not be limited by the terms. The terms are used only for the purpose of distinguishing one component from another component. For example, a first component could be termed a second component, and, similarly, a second component could be termed a first component, without departing from the scope of the present disclosure. Singular expressions include plural expressions unless the context clearly indicates otherwise.

In this specification, terms such as "include," "comprise," or "have" should be understood to specify the presence of features, numbers, steps, operations, components, or combinations thereof described in the specification, and should not be understood as precluding the presence or possibility of addition of one or more other features, numbers, steps, operations, components, or combinations thereof.

In addition, when a part of a layer, film, region, plate, or the like is disposed "on" another part, this includes not only a case in which one part is disposed "directly on" another part, but also a case in which still another part is interposed therebetween. In contrast, when a part of a layer, film, region, plate, or the like is disposed "under" another part, this includes not only a case in which one part is disposed "directly under" another part, but also a case in which still another part is interposed therebetween. In addition, being disposed "on" in the specification of the present disclosure may include a case in which it is disposed not only on the upper portion but also on the lower portion.

The present disclosure relates to a battery cell storage device and a battery cell activation method using the same.

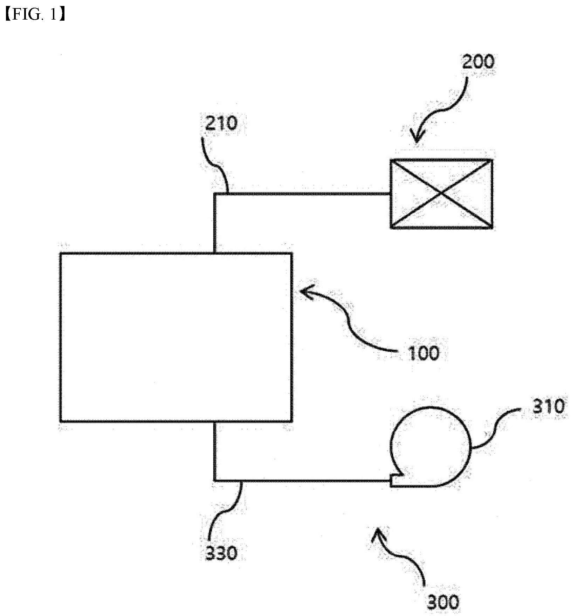

FIG. 1 to FIG. 16 relate to a battery cell storage device of the present disclosure, and FIG. 17 relates to a battery cell activation method of the present disclosure.

Hereinafter, specific embodiments of a battery cell storage device and a battery cell activation method according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

(In addition, a longitudinal direction of a certain component refers to a direction corresponding to a surface having the longest length of the component shown in the drawings based on a horizontal direction, and a width direction of a certain component is defined to refer to a direction perpendicular to the longitudinal direction based on the horizontal direction.)

### Battery Cell Storage Device 1000

FIG. 1 is a schematic diagram of a battery cell storage device 1000 of the present disclosure.

The battery cell storage device 1000 of the present disclosure includes a main body 100, a charge/discharge unit 200, and a vacuum unit 300 as shown in FIG. 1.

The main body 100 provides a space in which a battery cell 10 is accommodated.

The charge/discharge unit 200 serves to supply power so that the battery cell 10 accommodated in the main body 100 can be charged and discharged.

The charge/discharge unit 200 includes a charge/discharge terminal 210 capable of being electrically connected to the battery cell 10, and an end of the charge/discharge terminal 210 is positioned to face the inside of the main body 100.

The vacuum unit 300 serves to control pressure inside the main body 100.

Specifically, the vacuum unit 300 is in communication with the inside of the main body 100 to suction air inside the main body 100 for pressure reduction, or to inject air into the main body 100 for pressurization.

The vacuum unit 300 includes a pressure pump 310 that is operated to control the pressure inside the main body 100.

The vacuum unit 300 includes an air transfer pipe 330 connecting the pressure pump 310 and the main body 100. The pressure pump 310 may be in communication with the inside of the main body 100 through the air transfer pipe 330.

By the operation of the pressure pump 310, fluid moves between the main body 100 and the pressure pump 310 through the air transfer pipe 330.

The pressure pump 310 pressurizes or reduces the pressure inside the main body 100. For example, the pressure pump 310 may reduce the pressure inside the main body 100 to induce a vacuum state.

### (First Embodiment)

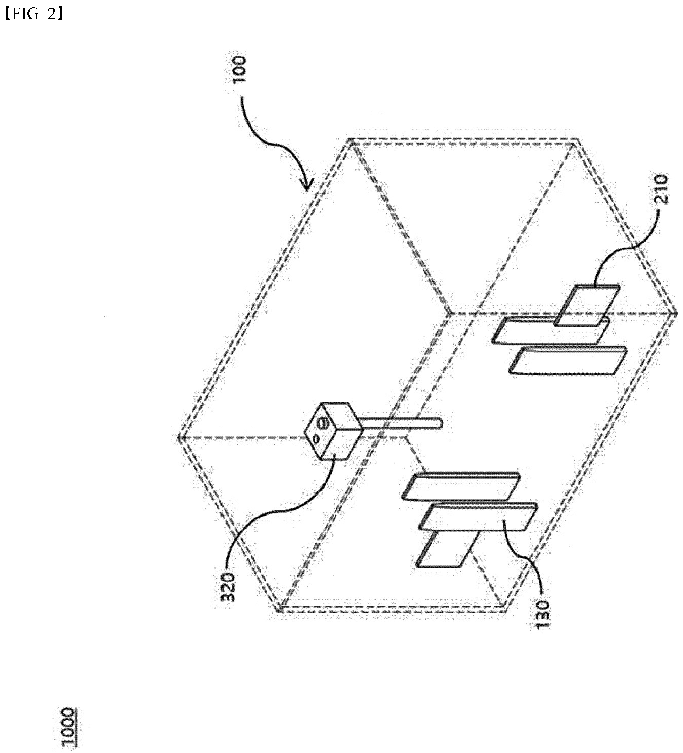

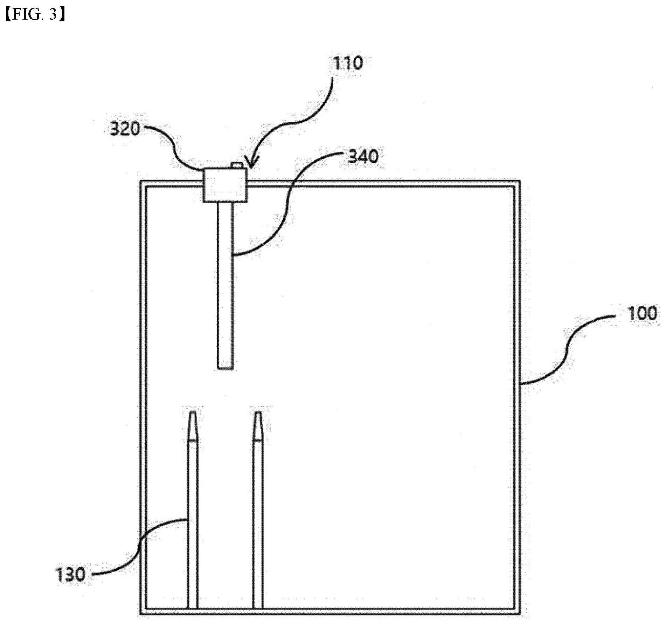

FIG. 2 is a perspective view of a main body 100 included in a battery cell storage device 1000 according to a first embodiment of the present disclosure, and FIG. 3 is a side view of the main body 100 of FIG. 2.

The main body 100 of the present disclosure includes a space in which a battery cell 10 can be accommodated inside as shown in FIG. 2 and FIG. 3.

The main body 100 may further include a fixing member 130 that supports the battery cell 10 accommodated inside the main body so that the battery cell 10 can be fixed in an upright position.

Referring to FIG. 2 and FIG. 3, the fixing member 130 is coupled to the bottom of the main body 100 and extends upward to a predetermined height. The battery cell 10 accommodated inside the main body 100 may be fixed by being fitted between the fixing members 130.

The fixing member 130 does not need to be limited to the form shown in FIG. 2 and FIG. 3, and any form capable of supporting and fixing a side portion of the battery cell 10 is applicable.

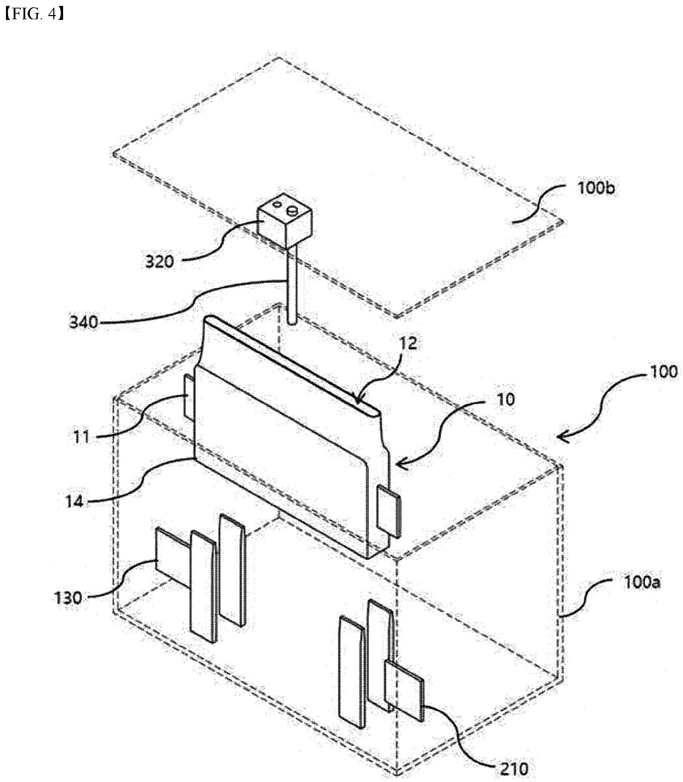

FIG. 4 is a perspective view illustrating a process of accommodating the battery cell 10 inside the main body 100 of FIG. 2.

The battery cell 10 is accommodated in the main body 100 in a state in which an opening 12 is formed on one side as shown in FIG. 4.

The main body 100 comprises a box-shaped tray 100a with an open upper portion and a cap 100b coupled to the upper portion of the tray 100a to seal an internal space of the tray 100a.

The battery cell 10 enters the inside of the main body 100 through the upper portion of the tray 100a as shown in FIG. 4, and is fixed by being fitted to the fixing member 130.

Any method and structure capable of coupling the cap 100b and the tray 100a such that it is not separated even under high pressure is applicable.

The battery cell 10 shown as an example is a pouch-type battery cell 10, and comprises an electrode assembly 13, a pair of electrode leads 11 electrically connected to the electrode assembly 13, and a pouch-type battery case 14 that surrounds the electrode assembly 13 so that the electrode leads 11 are protruded.

The battery case 14 of the battery cell 10 is not sealed so that the upper portion is open, and the remaining portions are sealed to support the electrode assembly 13 and the electrode leads 11.

The battery cell 10 has a form in which the electrode leads 11 are protruded to both sides.

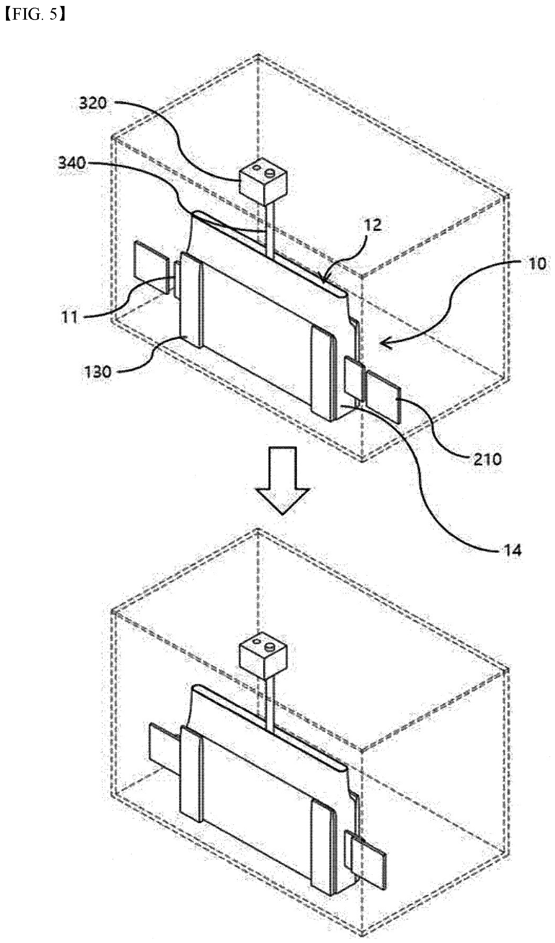

FIG. 5 is a perspective view illustrating a process of connecting a charge/discharge terminal 210 to the battery cell 10 of FIG. 4.

A pair of charge/discharge terminals 210 is protruded into the inside of the main body 100 as shown in FIG. 4 and FIG. 5.

The charge/discharge terminal 210 is provided to be capable of advancing and retreating toward the battery cell 10, and is electrically contacted with the electrode lead 11 of the battery cell 10 fixed to the fixing member 130.

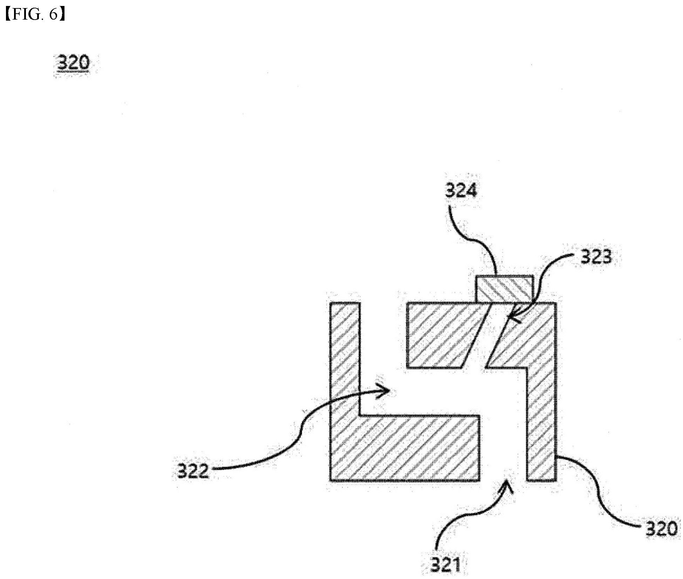

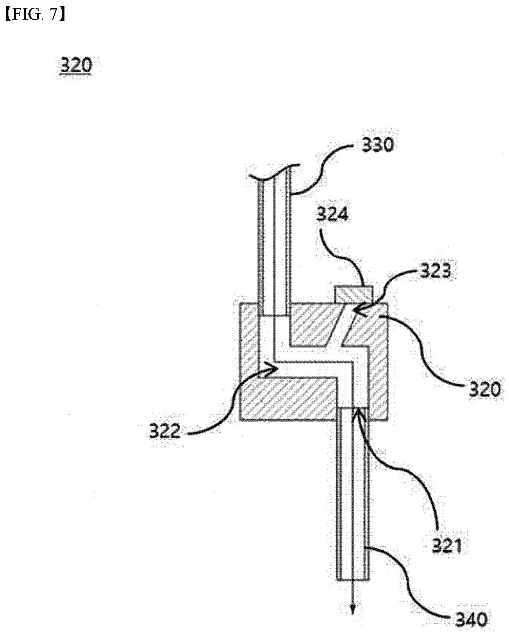

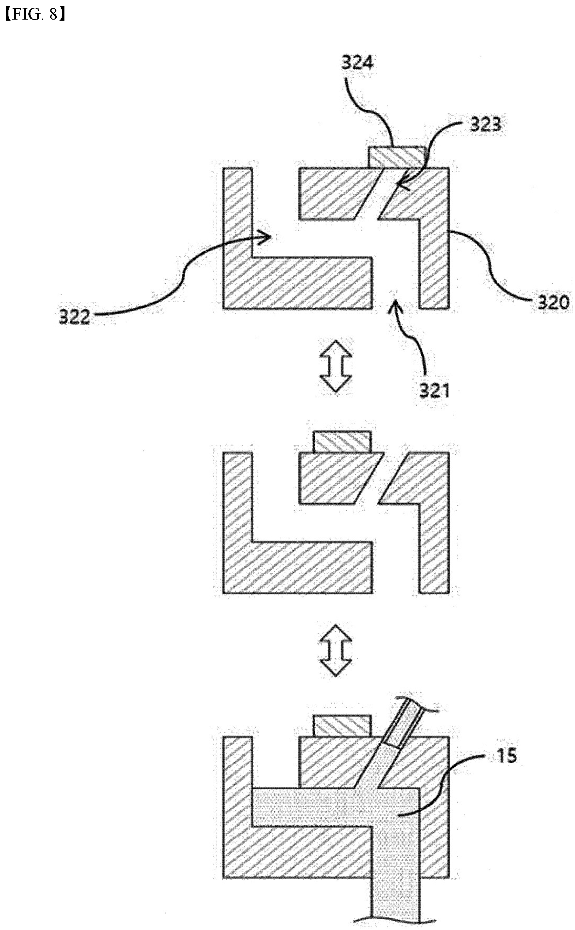

FIG. 6 is a cross-sectional view of a dual valve unit 320 of the present disclosure, FIG. 7 is a cross-sectional view of another embodiment of the dual valve unit 320 of FIG. 6, and FIG. 8 is a cross-sectional view illustrating an operation of the dual valve unit 320 of FIG. 6.

The vacuum unit 300 included in the battery cell storage device 1000 of the present disclosure further includes the dual valve unit 320 as shown in FIG. 2.

The main body 100 of the present disclosure includes at least one pressure control port 110 at the upper portion as shown in FIG. 2, and the vacuum unit 300 is coupled to the main body 100 to be connected to the pressure control port 110.

The dual valve unit 320 serves to transfer fluid pressure moving by the operation of the pressure pump 310 to the main body 100.

The air transfer pipe 330 is coupled to the dual valve unit 320 as shown in FIG. 7 to connect the pressure pump 310 and the dual valve unit 320. Therefore, the air transfer pipe 330 is in communication with the inside of the main body 100 through the dual valve unit 320.

The dual valve unit 320 includes a fluid outlet 321 opened toward the inside of the main body 100 at a lower portion as shown in FIG. 6 and FIG. 7, and includes a fluid flow path 322 formed such that the air transfer pipe 330 and the fluid outlet 321 are in communication.

In addition, the vacuum unit 300 includes a fluid discharge pipe 340 connected to the fluid outlet 321 of the dual valve unit 320.

The fluid discharge pipe 340 extends downward to a predetermined length, and faces the open upper portion of the battery cell 10 accommodated in the main body 100 as shown in FIG. 4 and FIG. 5.

The fluid discharge pipe 340 serves to accurately control the movement direction of fluid moving by the operation of the pressure pump 310. For example, when the pressure pump 310 suctions air, air inside the battery cell 10 is first suctioned through the fluid discharge pipe 340 facing the inside of the battery cell 10.

The battery cell storage device 1000 of the present disclosure is characterized in that, in addition to controlling the pressure inside the main body 100 through the dual valve unit 320, an electrolyte 15 can be supplied to the battery cell 10 accommodated in the main body 100.

The dual valve unit 320 further includes an electrolyte injection port 323 formed on one side to be in communication with the fluid flow path 322 and capable of being opened and closed as shown in FIG. 6.

The dual valve unit 320 may further include a sealing member 324 that blocks an inlet so that the electrolyte injection port 323 is sealed.

The sealing member 324 may be provided to slide on the dual valve unit, or may be provided to be detachable from the dual valve unit.

The sealing member 324 is separated from the electrolyte injection port 323 when the electrolyte 15 is injected into the electrolyte injection port 323.

The sealing member 324 blocks the electrolyte injection port 323 such that the pressure inside the main body 100 is not affected by the movement of fluid through the electrolyte injection port 323 when the injection of the electrolyte 15 is completed as shown in FIG. 8.

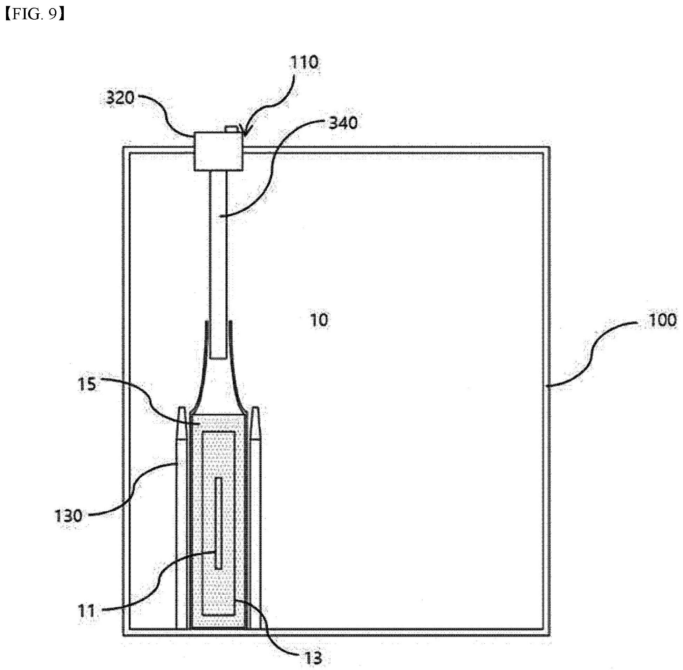

FIG. 9 is a cross-sectional view of the main body 100 of the battery cell storage device 1000 according to the first embodiment in which the battery cell 10 is accommodated.

The fluid discharge pipe 340 is inserted into the opening 12 of the battery cell 10 to a predetermined depth to inject the electrolyte 15 as shown in FIG. 9, and the electrolyte 15 is filled inside the battery case 14 together with the electrode assembly 13.

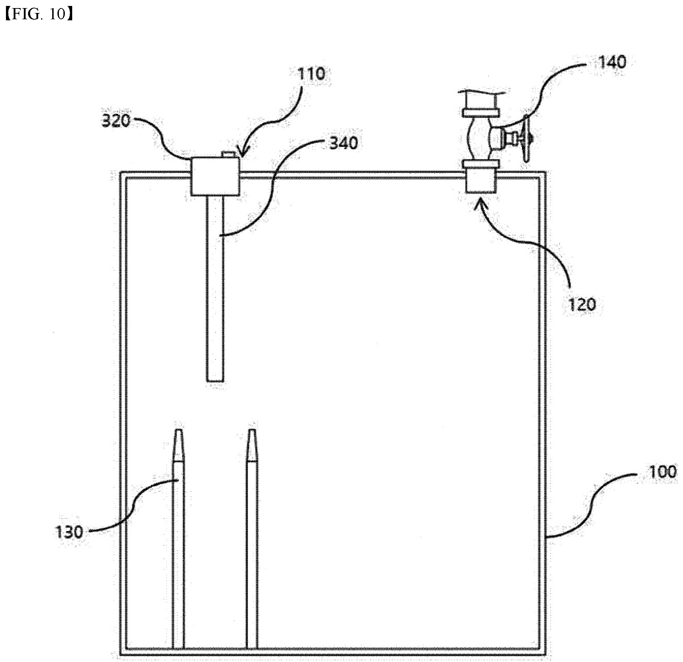

FIG. 10 is a modified example of the main body 100 of FIG. 3.

The main body 100 included in the battery cell storage device 1000 of the present disclosure may have a gas outlet 120 formed on one side as shown in FIG. 10, and the main body 100 may include a control valve 140 coupled to the gas outlet 120.

The control valve 140 may finely control the pressure inside the main body 100 by controlling a degree of opening and closing.

In addition, when gas is filled inside the main body 100 through activation of the battery cell 10 to increase the pressure, the control valve 140 may be opened to discharge the gas.

### (Second Embodiment)

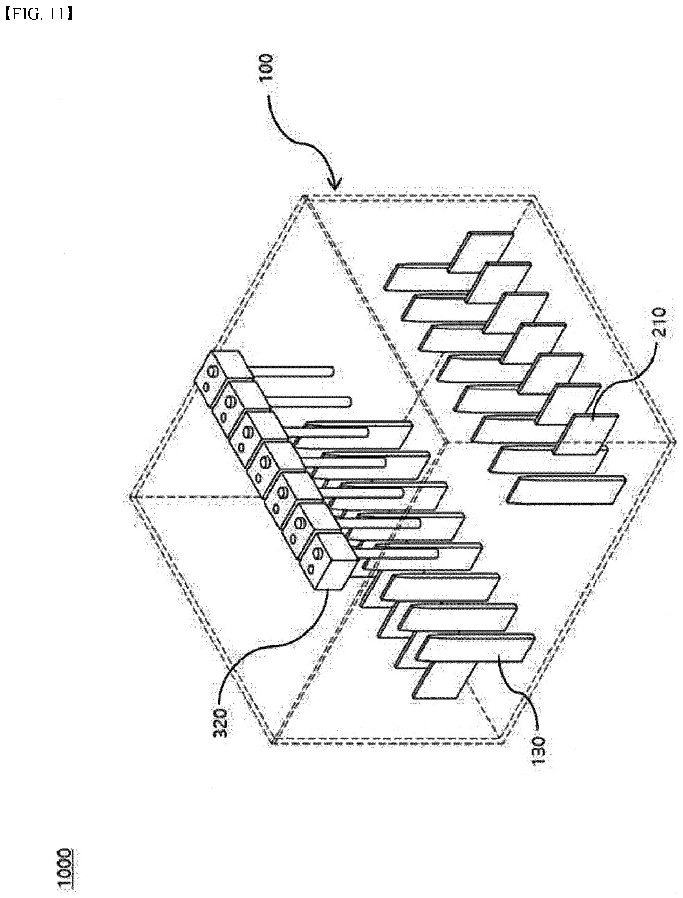

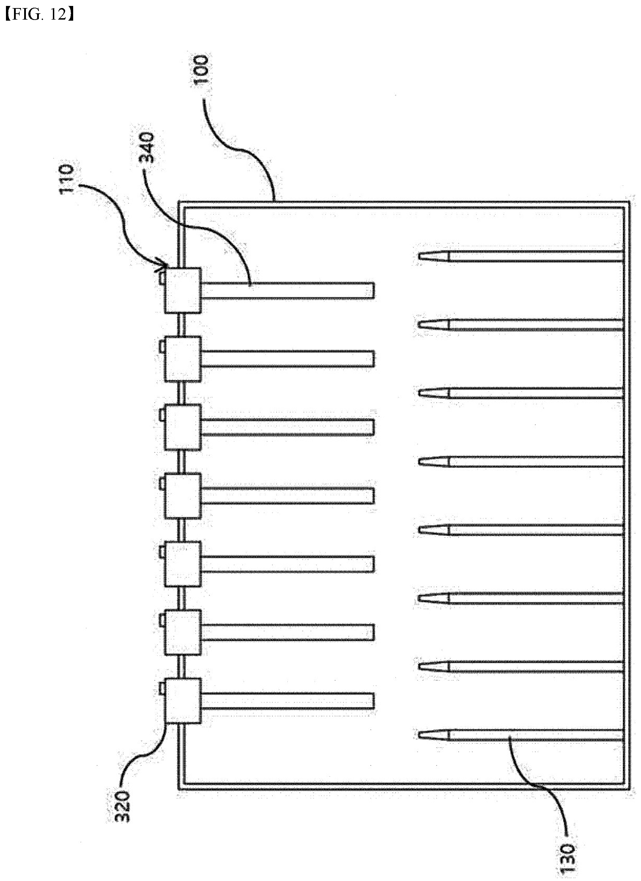

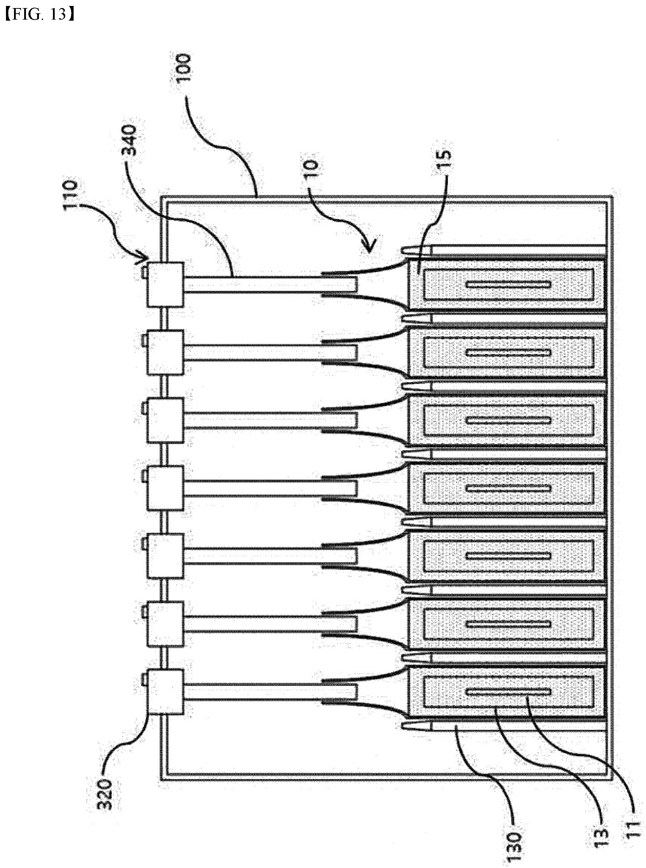

FIG. 11 is a perspective view of a main body 100 included in a battery cell storage device 1000 according to a second embodiment of the present disclosure, FIG. 12 is a side view of the main body 100 of FIG. 11, and FIG. 13 is a side view of the main body 100 of FIG. 12 in which a battery cell 10 is accommodated.

The battery cell storage device 1000 of the present disclosure may accommodate a plurality of battery cells 10 as shown in FIG. 11 to FIG. 13.

A plurality of fixing members 130 arranged to support both surfaces of each battery cell 10 may be provided on the bottom of the main body 100. Specifically, the fixing members 130 are arranged to be spaced apart by a thickness of the battery cell 10 along one direction of the main body 100, and the plurality of battery cells 10 are fixed by being fitted between the fixing members 130.

The charge/discharge terminal 210 may also be provided to be spaced apart at predetermined intervals along an arrangement direction of the fixing members 130 in correspondence with the number of electrode leads 11 of the battery cell 10.

The plurality of charge/discharge terminals 210 are electrically connected to each battery cell 10 fixed to the fixing members 130 to simultaneously charge and discharge the plurality of battery cells 10 for activation.

The main body 100 includes a plurality of pressure control ports 110 corresponding to the number of the battery cells 10, and the vacuum unit 300 includes a plurality of dual valve units 320 corresponding to the number of the pressure control ports 110.

According to some embodiments, the dual valve units 320 connected to each pressure control port 110 may be connected to one pressure pump 310.

According to some other embodiments, the dual valve units 320 connected to each pressure control port 110 may be independently connected to different pressure pumps 310.

### (Third Embodiment)

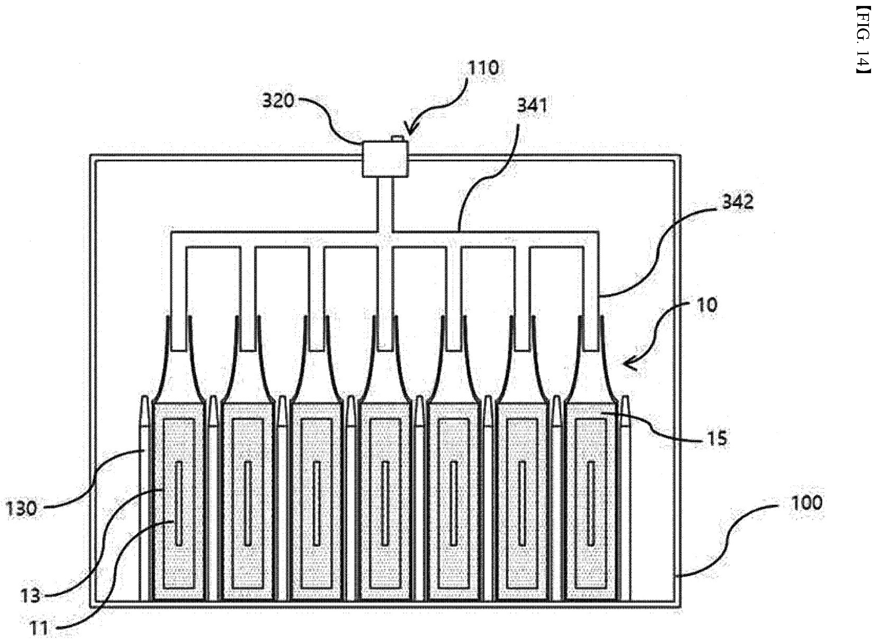

FIG. 14 is a side view of a main body 100 included in a battery cell storage device 1000 according to a third embodiment of the present disclosure.

The battery cell storage device 1000 of the present disclosure can simultaneously supply an electrolyte 15 to a plurality of battery cells 10 through one dual valve unit 320, and can suction air inside.

According to FIG. 14, a fluid discharge pipe 340 connected to one dual valve unit 320 may comprise a main pipe 341 directly connected to the fluid outlet 321 and a plurality of sub-pipes 342 branched from the main pipe 341.

Each of the sub-pipes 342 is inserted into the opening 12 of a different battery cell 10 arranged in the main body 100.

Since each of the sub-pipes 342 is branched from one main pipe 341 connected to the dual valve unit 320, fluids moving through each of the sub-pipes 342 have the same fluid pressure.

### (Fourth Embodiment)

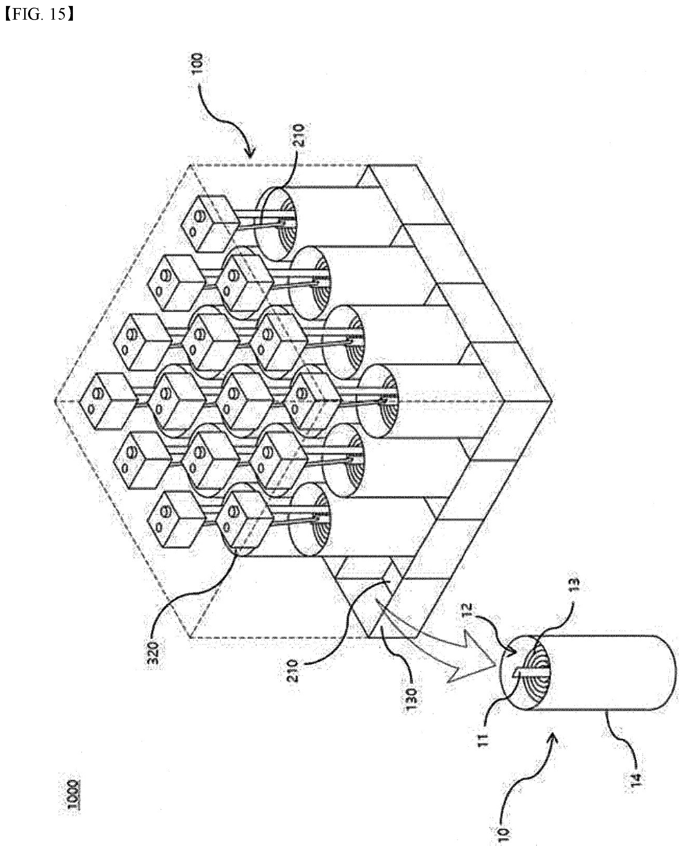

FIG. 15 is a perspective view of a main body 100 included in a battery cell storage device 1000 according to a fourth embodiment of the present disclosure and a battery cell 10 accommodated therein.

The battery cell storage device 1000 of the present disclosure may be applied to a cylindrical battery cell 10 including a cylindrical battery case.

An electrode assembly 13 is accommodated in a jelly-roll form inside the cylindrical battery case, any one of a pair of electrode leads 11 is connected to the bottom of the cylindrical battery case, and the other electrode lead 11 is protruded to the open upper portion.

In this case, the battery cell storage device 1000 may modify the shape of the fixing member 130 in correspondence with the cylindrical battery case shape to fix the battery cell 10 in an upright position.

According to some embodiments, the fixing member 130 is partitioned in a lattice form as shown in FIG. 15, and is formed such that the battery cell 10 is inserted into the partitioned space.

A part of the charge/discharge terminal 210 of the battery cell storage device 1000 is formed on the bottom of the main body 100 and is electrically connected to a lower portion of the battery cell 10 supported by the fixing member 130, and another part is provided to be connected to the electrode lead 11 protruded through the opening 12 of the battery cell 10.

### Activation Method of Battery Cell 10

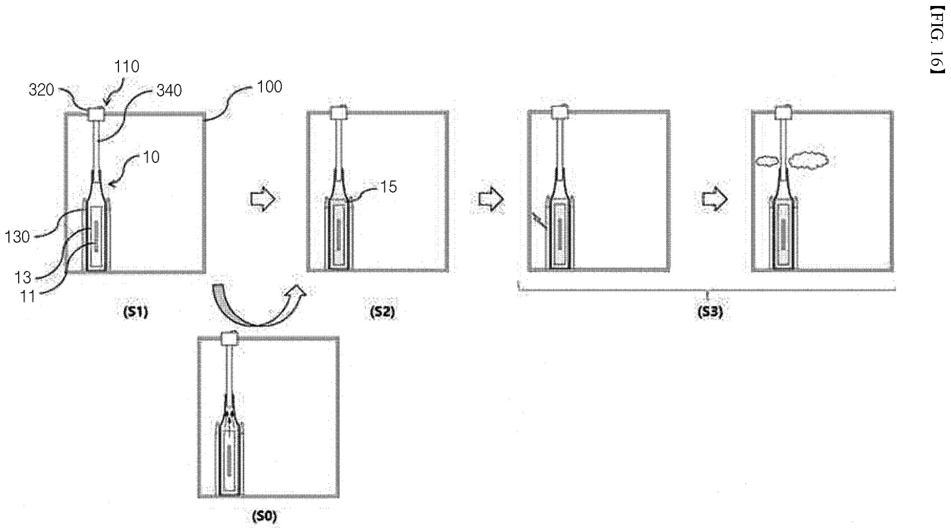

FIG. 16 is a process flowchart illustrating an activation process of the battery cell 10.

The activation method of the battery cell 00 of the present disclosure comprises a preparation step S1, an electrolyte injection step S2, and an activation step S3.

The preparation step S1 is a step of accommodating a battery cell 10 in the battery cell storage device 1000 of the present disclosure, wherein a fluid discharge pipe 340 is inserted into an upper portion of the battery cell 10 fixed to a fixing member 130, and a charge/discharge terminal 210 is electrically connected to an electrode lead 11 of the battery cell 10.

The electrolyte injection step S2 is a step of supplying an electrolyte 15 to the battery cell 10, wherein the electrolyte 15 injected through the fluid discharge pipe 340 is filled in a battery case 14 together with an electrode assembly 13.

The activation step S3 is a process of charging and discharging the battery cell 10 through the charge/discharge terminal 210, and the activation of the present disclosure is characterized in that it proceeds while maintaining a state in which a part of the battery cell 10 is open. Therefore, activation gases generated in the activation step do not remain inside the battery cell 10 and are discharged to the main body 100 through the opening 12.

According to some embodiments, a pressure reduction step S0 of reducing pressure inside the main body 100 may be further included before the preparation step S1, as shown in FIG. 16.

In other words, before filling the electrolyte 15, residual air inside the battery cell 10 can be suctioned to remove factors that hinder impregnation of the electrolyte 15 in advance.

According to some other embodiments, a pressure reduction step S0 of reducing pressure inside the main body 100 may be further included after the preparation step S1.

According to still other embodiments, a pressure reduction step S0 of reducing pressure inside the main body 100 may be further included before and after the preparation step S1, respectively.

As described above, the battery cell activation method of the present disclosure can smoothly perform injection and filling of the electrolyte 15 through the vacuum unit 300 at an appropriate time, and can also perform impregnation and activation of the electrolyte 15 non-stop at once. By the battery cell storage device 1000 of the present disclosure and the battery cell activation method using the same, process efficiency is improved as a result, and effects of cost reduction and defect rate reduction can be achieved.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

### [Description of Reference Numerals]

1000: battery cell storage device
10: (prior art) battery cell
11: (prior art) electrode lead
12: (prior art) opening
13: (prior art) electrode assembly
14: (prior art) battery case
15: (prior art) electrolyte
100: main body
100a: tray
100b: cap
110: pressure control port
120: gas outlet
130: fixing member
140: control valve
200: charge/discharge unit
210: charge/discharge terminal
300: vacuum unit
310: pressure pump
320: dual valve unit
321: fluid outlet
322: fluid flow path
323: electrolyte injection port
324: sealing member
330: air transfer pipe
340: fluid discharge pipe
341: main pipe
342: sub-pipe
S0: pressure reduction step
S1: preparation step
S2: electrolyte injection step
S3: activation step

## Claims

1. A battery cell storage device comprising:
a main body in which a battery cell is accommodated inside and which is capable of being sealed;
a charge/discharge unit comprising a charge/discharge terminal electrically connected to an electrode lead of the battery cell in the main body; and
a vacuum unit,
wherein the vacuum unit controls pressure inside the main body.

2. The battery cell storage device of claim 1, wherein the battery cell is accommodated in the main body in a state in which an opening is formed on one side.

3. The battery cell storage device of claim 1, wherein the vacuum unit is in communication with the inside of the main body to suction air inside the main body for pressure reduction, or to inject air into the inside of the main body for pressurization.

4. The battery cell storage device of claim 2, wherein the main body comprises at least one pressure control port, and
wherein the vacuum unit is connected to the pressure control port.

5. The battery cell storage device of claim 4, wherein the vacuum unit comprises:
a pressure pump;
a dual valve unit installed at the pressure control port and comprising a fluid outlet opened toward the inside of the main body at a lower portion;
an air transfer pipe connecting the pressure pump and the dual valve unit; and
a fluid discharge pipe connected to the fluid outlet,
wherein the dual valve unit comprises a fluid flow path formed such that the air transfer pipe and the fluid outlet are in communication.

6. The battery cell storage device of claim 5, wherein the dual valve unit further comprises an electrolyte injection port formed on one side to be in communication with the fluid flow path and capable of being opened and closed, and
wherein an electrolyte supplied to the electrolyte injection port is delivered to the battery cell in the main body through the fluid discharge pipe.

7. The battery cell storage device of claim 5, wherein an end of the fluid discharge pipe faces the opening of the battery cell.

8. The battery cell storage device of claim 5, wherein the main body comprises a plurality of pressure control ports, and
wherein the vacuum unit comprises a plurality of dual valve units corresponding to the number of the pressure control ports.

9. The battery cell storage device of claim 5, wherein the fluid discharge pipe comprises:
a main pipe directly connected to the fluid outlet; and
a plurality of sub-pipes branched from the main pipe,
wherein fluids moving through each of the sub-pipes have the same fluid pressure.

10. The battery cell storage device of claim 9, wherein the end of each of the sub-pipes faces the opening of a different battery cell.

11. The battery cell storage device of claim 1, wherein the main body further comprises a gas outlet formed to be capable of being opened and closed to control air pressure inside the main body and to discharge gas.

12. The battery cell storage device of claim 2, wherein the main body further comprises a fixing member for fixing the battery cell to stand upright such that the opening of the battery cell faces upward.

13. The battery cell storage device of claim 1, wherein the battery cell has any one form of a cylindrical type comprising a cylindrical battery case with an open upper portion, and a pouch type comprising a pouch-type battery case with one side open.

14. A battery cell activation method comprising:
a preparation step of accommodating a battery cell in the battery cell storage device of claim 1;
an electrolyte injection step of supplying an electrolyte to the battery cell; and
an activation step of activating the battery cell by charging and discharging the battery cell.

15. The battery cell activation method of claim 14, further comprising a step of reducing pressure inside the main body before the preparation step.

16. The battery cell activation method of claim 14, further comprising a step of reducing pressure inside the main body after the preparation step.
